# EUROPEAN PATENT APPLICATION

(11) **EP 0 548 597 A1**
(43) Date of publication of application: **30.06.1993**
(21) Application number: 92120444.2
(22) Date of filing: 01.12.1992
(51) Int. Cl.: H04N 1/21

(54) **Method and system of delivering multimedia information to a user**

(30) Priority: 20.12.1991 US 812177
(71) Applicant: International Business Machines Corporation, Armonk, N.Y. 10504 (US)
(72) Inventor: Pascoe, Robert A., Grapevine, TX 76051 (US)
(74) Representative: Burt, Roger James, Dr.

(57) **Abstract**

A method and apparatus is provided for delivering multimedia information to a user at a workstation in a data processing system. This invention utilizes existing office equipment for the playback of audio and visual information through the use of the telephone for playback of audio information and the workstation's image display capability for playback of visual information. Audio information is captured and stored in a device which may be accessed via a telephone connection. Storage of the information may be in analog or digital form. Visual information is captured using a video capture adaptor or computer connected scanning device and stored digitally in a form usable by a playback component. A play list is prepared for the visual information which identifies the order and duration for presentation of the captured images. The digital images and associated play list may be sent to the workstation via modem, Local Area Network (LAN), etc. Upon arrival at the user's workstation, playback of the visual information is accomplished utilizing the play list which indicates the order and duration of the visual images. The audio information is presented by calling a specified telephone number to access a pre-recorded audio messages associated with the video and is then synchronized with the visual information.

## Description

This invention relates to a method and apparatus for transmitting information, and more particularly, to transmitting multimedia information using a standard computer and a telephone.

Multimedia hardware, software, and applications are effective ways to deliver information to a computer user. It has been shown that information is retained at a higher rate when information is presented in a pictorial and audible form. Much innovation has taken place in recent years in the development of audio and video computer delivery mechanisms, but all have required extensions of the existing hardware base. For example, the IBM Corporation offers an Analog Full Motion Video card (M-motion adaptor) for the "IBM PERSONAL SYSTEM/2" ("PS/2") computer that enables video signals to be presented in a "PRESENTATION MANAGER" window. This card also allows the accompanying audio information to be sent to an external speaker that is attached to the PS/2. The IBM Corporation also manufactures an Audio Capture Playback Adaptor (ACPC) that will digitize audio signals, and playback these digitized signals through an external speaker. Another example is the IBM Digital Full Motion Video card set (Action Media) which provides for the digitization of analog video and playback of the resulting digital video signals. In all cases, these cards are extra cost, optional features which a user must incur in obtaining a workstation with integrated audio and video.

One approach to reduce the cost of delivering multimedia information consists of a system in which terminals of a multi-terminal network access and manipulate a central data base of digitised audio/visual information (e.g. video slides with audio narration). The video is entered into the system via a raster scan. A page image is transmitted a line at a time from the scanning source to a communication controller which interfaces with a central data base video store. The page images are compressed and the compressed image is stored in a large capacity volumetrically efficient file (e.g. disc). The audio is converted to delta-modulation bits and transmitted to the communication controller interspersed with the video in fixed increments of 256 bytes or one-thirty of a second of audio input. Each of the audio byte sets is identified as an entity with appropriate addressing control tags. While accessible by a large number of users, this approach suffers from the need for specialized playback cards in the workstation.

Consequently, what is needed is an apparatus and method for delivering low cost audio/visual information to a workstation without the need for extra cost optional playback features.

This invention relates to a method and apparatus for delivering multimedia information to a user at a workstation in a data processing system.

The invention as claimed has the advantage of utilizing existing office equipment for the playback of audio and visual information through the use of a telephone for playback of audio information and the image display capability of a workstation for the playback of visual information. Audio information is captured and stored in a device which may be accessed via a telephone connection. Storage of the audio information may be in analog or digital form. Visual information is captured using a Video capture adaptor, computer connected scanning device and/or a presentation graphics editor and stored digitally in a form usable by a playback component. A play list is prepared for the visual information which identifies the order and duration for presentation of the visuals. The visual and audio information are then provided to the end user in the following manner. The visuals and associated play list may be sent to the end user's workstation via modem, Local Area Network (LAN), etc. Upon arrival at the end user's workstation, playback of the visual information is accomplished utilizing the play list which indicates the order and duration of the visual images. The audio information is presented by calling a specified telephone number to access the previously recorded audio messages which is then synchronized with the visual information.

Figure 1 is a block diagram of a data processing system where this invention may be practiced.

Figure 2 is a block diagram of an Interactive Work Station used in the practice of this invention.

Figure 3 illustrates the preparation component for capturing multimedia information in using this invention.

Figure 4 illustrates playback of multimedia information at a workstation using this invention.

The Low Cost Audio/Visual System (LCAVS), as disclosed herein, takes advantage of existing office equipment for the playback of multimedia information. A telephone is used for the playback of audio information and the image display capability of a workstation is used for the playback of visual information. The LCAVS consists of several distinct components, which includes 1) a preparation component, 2) a delivery component, and 3) a playback component. The preparation component is used to create the audio/visual presentation data. The audio preparation component consists of a device for capturing the audio information and storing it such that it can be accessed via a telephony connection. Telephony as used herein refers to the transmission of speech or other sounds. For example, the audio capture and storage device may be a "DICTAPHONE" answering machine which stores audio in analog form and plays that audio through a telephone connection when the phone number of the device is called. Alternatively, the audio storage device my be a computer controlled audio response unit which stores audio data in digital form and may be interfaced to telephone networks.

Visual information may be captured via a device like the IBM Video Capture Adaptor. Alternatively, a computer connected scanning device may be used to capture visuals. Once captured, visual images are stored digitally in a format suitable for viewing by a playback component. For example, visual images may be stored in .PCX (picture exchange file) or .BMP (bitmap) formats which are capable of playback by a number of well known playback processes including IBM STORYBOARD, Hollywood, AVC (Audio Video Connection) or other image file browsers. Compression techniques may also be applied to this digital data for economics of storage and bandwidth.

The final step in the preparation component is the generation of the play list for the visual images which can be generated with any number of file browsers including Story Board, Hollywood and AVC. This play list identifies the order and duration for the presentation of each of the captured visual images. The play list is derived by associating each of the visual images with the audio information and recording the time duration of the audio clip that is to accompany the visuals.

The delivery component is used to deliver the audio and visual information to the workstation. Typically, the delivery component for the audio data is integrated in the playback component as the audio data is accessed via telephone during the playback phase. The delivery component for the digital visual images and associated play list is sent directly to the workstation by a distribution mechanism such as a modem, Local Area Network (LAN), LAN based file server, etc.

The playback component is used to present the audio and visual information to an end user at a workstation. The basic element of the visual playback component is an automated image presentation process such as that found in Story Board, Hollywood and AVC. This process will display the visual images captured by the preparation component and distributed by the delivery component. The visual images will be displayed in the order, and for the time duration specified in the play list. The audio information is presented via the telephone such that an end user calls a specified telephone number to access a pre-recorded audio message.

Synchronization of the audio and visual information is accomplished in the following manner. Presentation of the visual information is started and proceeds to a point in the visuals where a text message has been inserted. The text message prompts the user to dial a telephone number and to be ready to press a specific key on one of the workstation's I/O devices (e.g. keyboard, mouse) when instructed to do so. The visual presentation pauses and waits for the key depression. The user dials the phone number and receives an audio message to strike the specified key on the workstation when a tone is heard. Striking the key when the tone sounds causes the audio and visual presentation to proceed in synchronization (sync). A difference of as much as plus or minus one second, in most instances, between the tone and the key depression will be tolerable.

Alternatively, more sophisticated synchronization techniques may be provided. For example, if the presentation workstation is equipped with a dial out facility and tone generation, the visual presentation program may place the call for the end user and start the automated visual presentation through interaction with the telephone answering device. In the same way, when a sophisticated telephone answering device is used, pauses may be inserted in the presentation with the user asked to press a certain key on the telephone key pad when the presentation is to continue. This technique may also be used to modify the content of the presentation such as pressing 1 for help, 2 to review, and 3 to continue. Again, in a sophisticated configuration, the presentation workstation may generate the correct tones for the end user.

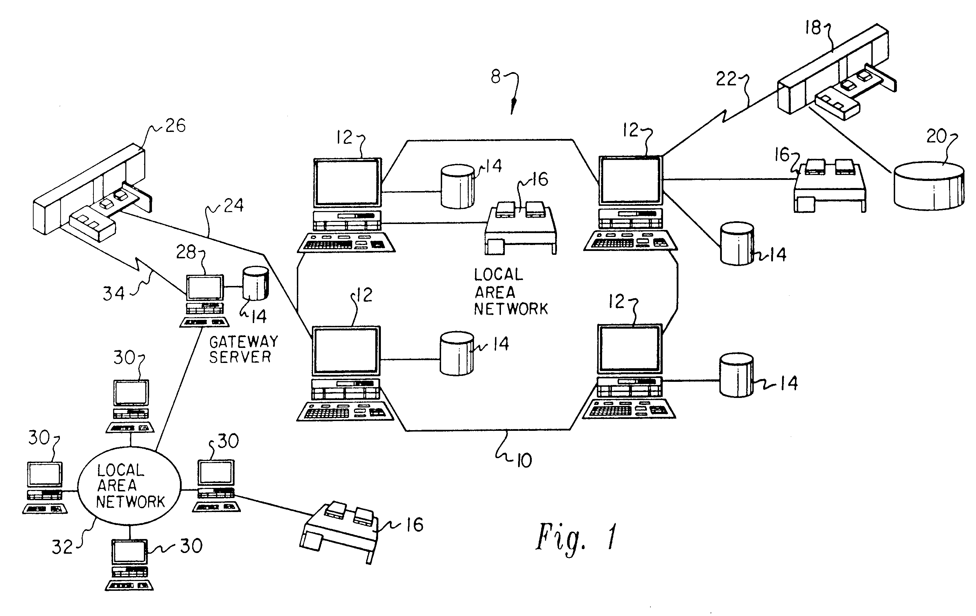

With reference now to the figures, and in particular with reference to Figure 1, there is depicted a pictorial representation of a data processing system 8 which may be utilized to implement the method of the present invention. As may be seen, data processing system 8 may include a plurality of networks, such as Local Area Networks (LAN) 10 and 32, each of which preferably includes a plurality of individual computers 12 and 30, respectively. Of course, those skilled in the art will appreciate that a plurality of Interactive Work Stations (IWS) coupled to a host processor may be utilized for each such network.

As is common in such data processing systems, each individual computer may be coupled to a storage device 14 and/or a printer/output device 16. One or more such storage devices 14 may be utilized, in accordance with the method of the present invention, to store applications or resource objects which may be periodically accessed by any user within data processing system 8. In a manner well known in the prior art, each such application or resource object stored within a storage device 14 is associated with a Resource Manager, which is responsible for maintaining and updating all resource objects associated therewith.

Still referring to figure 1, it may be seen that data processing system 8 may also include multiple main frame computers, such as main frame computer 18, which may be preferably coupled to Local Area Network (LAN) 10 by means of communications link 22. Main frame computer 18 may also be coupled to a storage device 20 which may serve as remote storage for Local Area Network 10. Similarly, Local Area Network (LAN) 10 may be coupled via communications link 24 through a subsystem control unit/communications controller 26 and communications line 34 to a gateway server 28. Gateway server 28 is preferably an individual computer or Interactive Work Stations (IWS) which serves to link Local Area Network (LAN) 32 to Local Area Network (LAN) 10.

As discussed above with respect to Local Area Network (LAN) 32 and Local Area Network (LAN) 10, resource objects may be stored within storage device 20 and controlled by main frame computer 18, as resource manager for the resource objects thus stored. Of course, those skilled in the art will appreciate that main frame computer 18 may be located a great geographic distance from Local Area Network (LAN) 10 and similarly Local Area Network (LAN) 10 may be located a substantial distance from Local Area Network (LAN) 32. That is, Local Area Network (LAN) 32 may be located in California while Local Area Network (LAN) 10 may be located within Texas and main frame computer 18 may be located in New York.

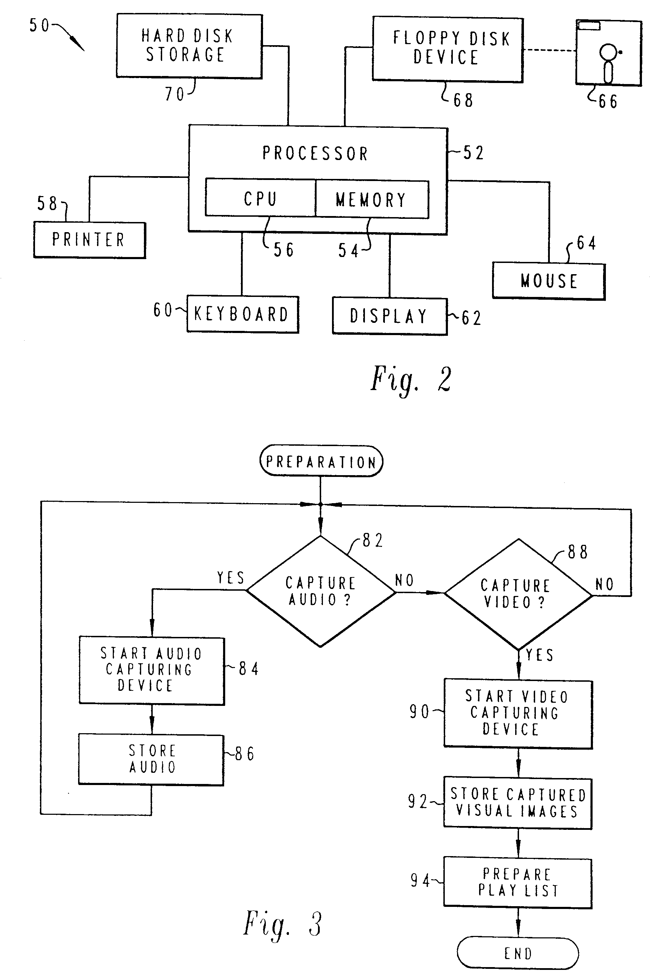

Turning now to Figure 2, there is depicted in greater detail a pictorial representation of the Interactive Work Station IWS (herein after "workstation") utilized in data processing system 8 described above. As may be seen, workstation 50 may include a processor unit 52 having therein a central processing unit 56 (CPU) coupled to memory 54. Of course, those skilled in the art will appreciate that a plurality of user Input/Output devices may be connected to the processor unit 18 including a keyboard 60 for user entry, a display 62 for viewing the output of a computer program, a printer 58, and a pointing device such as a mouse 64.

As is common in such workstations, auxiliary storage may be provided in the form of fixed hard disk storage 70 and/or floppy disk device 68. Removable media in the form of a diskette 66 may be used to input a computer program into the workstation 50 via the floppy disk device 68. It should be understood that the method disclosed by this invention may be described in a computer program and inputted in the manner described above. It should be understood that the above workstation may be an IBM Personal System/2 (PS/2) or a so called IBM compatible computer.

Turning to Figure 3, a description of the preparation component of the invention is shown. A test is conducted at block 82 to determine if a user intends to capture audio information. If audio capture is desired, starting the audio capturing device is performed at block 84. The audio information is then stored as shown in block 86. After capturing the audio information, processing continues at block 88 where a test is conducted at block 88 to determine if video capturing is desired. If video capturing is desired, starting the video capturing device is performed as indicated at block 90. The captured video is then stored as shown in block 92. After the video information has been captured and stored, a play list is generated as shown in block 94. The play list may be generated by manual or automated techniques. In the manual technique, the preparation specialist reviews the captured visuals, selecting those which best represent the information presented in the audio track. Once these visuals have been selected, the order of their presentation may be determined. Next, the audio message is again reviewed. This time the duration of the audio message associated with each selected visual is noted. The play list may now be generated. It contains the file name of each visual, listed in the order in which they are to be viewed, and the associated presentation time duration for each visual. This play list generation technique may be automated, with a computer system recording the time duration between captured visuals during the capture process. This duration is then added to the play list when the capture is completed. Processing ends after creation of the play list. Although this figure shows the audio and video capture occurring in a serial fashion, one skilled in the art will recognize that these processes may take place in parallel.

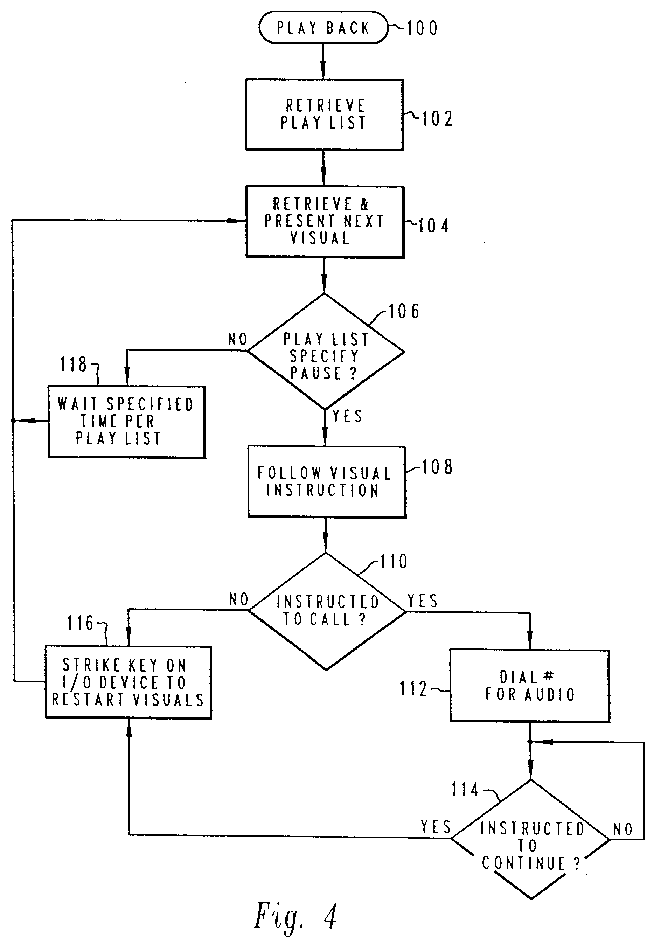

Turning now to Figure 4, playback 100 of the captured information will now be described. The play list is retrieved from the storage medium in block 102. The play list is used to direct the visual presentation. In block 104, the visual images specified in the play list is retrieved and presented using the appropriate image browser. Once presented, the play list for the current visual is inspected in block 106. If the play list specifies that the presentation should pause, processing continues at block 108. If the play list does not specify pause, processing continues at block 118. In block 118, the process waits the specified time period and returns processing to block 104 where the next visual is retrieved and presented.

Return to block 108, which was entered when the play list specifies pause. The pause is entered when the end user is required to take some action. The action to be taken is specified in the visual. In block 108, the instructions are followed. In block 110, if these instructions specify that a phone call should be made, the processing continues to block 112. Otherwise, process continues to block 116, where the end user strikes a key on the computer system I/O device to restart the presentation. For example, the block 110 to block 116 path would be needed if the visual presentation requested the end user to start another application prior to continuing the presentation.

In block 112, the end user dials the specified telephone number (#). The telephone connection is made and the audio message begins to play. In block 114, the end user waits for the audio message to indicate that the visual should be started. When so instructed, the end user strikes the key on the I/O device in block 116 to restart the visuals. This causes the audio and visuals to synchronize. Since the delay times in the play list were specified in sync with the audio, continued playback of the visuals will remain in sync with the audio.

In summary, this invention provides a method and apparatus for delivering low-cost multimedia information to a user at a workstation in a data processing system. Common telephone play-back, synchronized with the visual display of images on a workstation, is used for the multimedia presentation. Audio messages may be stored in a central facility such as a phone-mail mailbox, a dial-up audio recorder, or a phone accessible computer with voice generation capability. Each of the audio capture and storage alternatives provides varying degrees of flexibility when delivering audio to the workstation. At a maximum, end users may have to manually dial a telephone number to retrieve the audio messages for a multimedia presentation. On the other hand, a receiving workstation with optional telephony features may automatically dial the telephone number to retrieve the audio information. Alternatively, a receiver phone with speaker phone capability may provide hands free delivery of the audio information. The visual information is reduced to a set of "slides" depicting the salient points of a video presentation. The slides are captured by image or video capturing devices and encoded in a standardized formation (e.g. bitmap (.BMP)). The slides are then distributed to an end user's workstation through connectivity means (e.g. network, LAN, etc). The slides data base includes a table indicating the viewing order of the slides and the viewing duration for each slide. The table is used by the end user to automate the viewing process and keep the slide presentation synchronized with the original video presentation. The workstation is equipped with viewing software which displays the visuals in the sequence and duration specified in the accompanying table. The viewing software selects the correct viewing requirements associated with a particular workstation's hardware display capabilities. This includes setting such information as scaling, color palette, PEL density, etc. The invention thus provides a representation of an original full motion multimedia presentation on a workstation not enabled for multimedia presentations. Consequently, a plurality of multimedia features become available to a user at a workstation in a data processing system. For example, a TV news program announcer/reporter may read the news which is accompanied by motion video pictures of the announcer/reporter plus scenes of the story being reported. The disclosed invention provides for capturing the audio information verbatim from the motion video presentation. Selected still images of the motion video sequence may be captured and stored using the IBM video capture adaptor. The still images are a mix of the images of the announcer/reporter and associated scenes. A play list is generated by associating a picture with an audio passage and noting the duration of each passage. Playback of the data provides the end user with full audio content of the original presentation with synchronized still images extracted from the original presentation. The invention may also be extended to the presentation of procedural instructions. For example, step-by-step audible instructions may be delivered in sync with visualization of a process such as parts assembly, software installation instruction, user interface interactions, cultural protocols, etc. Audio/Visual mail, likewise, may be presented. The visual images along with the play list may be electronically mailed to an individual who has the presentation component. When the mail is opened, the first image would instruct the end user to call a telephone number for the audio portion of the message or , alternatively, the workstation may be enabled to make the telephone call. Finally, multimedia presentations may be easily provided using the invention. Presentations such as a message from the president, instructions on the latest company benefits package, how to interpret the latest price/performance data may all be packaged using the present invention.

## Claims

1. A method of delivering multimedia information to a user at a workstation in a data processing system, comprising:
capturing (84) and storing (86) audio information in telephony means retrievable by said user using said telephony means;
capturing (90) visual information and storing (92) said visual information as a plurality of individual frames;
preparing (94) a play list for said visual information including order and duration for presentation of each of said plurality of individual frames; and
presenting (100-118) said plurality of individual frames in said workstation synchronized with said audio information retrieved by said user from said telephony means.

2. A method of delivering multimedia information to a workstation in a data processing system as recited in claim 1, wherein said step of capturing (84) said audio information includes a step of storing (86) said audio information in a telephone answering device.

3. A method of delivering multimedia information to a workstation in a data processing system as recited in claim 1, wherein said step of capturing said audio information includes a step of capturing (84) and storing (86) said audio information in analog form.

4. A method of delivering multimedia information to a workstation in a data processing system as recited in claim 1, wherein said step of capturing said audio information includes a step of capturing (84) and storing (86) said audio information in a computer controlled audio response unit.

5. A method of delivering automated visual images and audio to a user at a workstation in a data processing system, comprising:
displaying (102,104) a plurality of captured visual images on said workstation as specified in a table; and
presenting simultaneously audio information received over telephony means and synchronized (106-118) with said plurality of captured visual images.

6. A method of delivering automated visual images and audio to a user at a workstation in a data processing system as recited in claims 5 , further comprising:
generating a table associating each of the plurality of captured images with audio information in telephony means and recording the time duration of prerecorded speech with said plurality of captured images.

7. A method of delivering automated images and audio to a user in a data processing system as recited in claim 5 or 6, wherein said step of presenting simultaneously audio information includes a step (108-116) of synchronizing said plurality of captured visual images with said audio externally by said user by dialing (112) said telephony means and pressing (116) a key on said workstation in response to an audio message delivered by said telephony means.

8. A method of delivering automated visual images and audio to a user at a workstation in a data processing system as recited in any of the claims from 1 to 7, comprising:
delivering said table and captured images to said workstation by a LAN.

9. A multimedia delivery system including a workstation in a data processing system and telephony retrieval means, comprising:
means for receiving (102,104) a sequence of visual images into said workstation;
means for displaying (104) said sequence of visual images to a user at said workstation according to a table containing the duration and sequence ordering for said sequence of visual images; and
means for synchronizing (108-116) said display with audio received over said telephony retrieval means.

10. A multimedia delivery system as recited in claim 9, comprising:
means for capturing and storing (84,86) audio information in said telephony retrieval means; and
means for capturing (90) said sequence of visual images and storing (92) each of said visual images as a plurality of individual frames;
